# EUROPÄISCHE PATENTSCHRIFT

(11) **EP 4 196 975 B1**
(45) Veröffentlichungstag und Bekanntmachung des Hinweises auf die Patenterteilung: **29.01.2025**
(21) Anmeldenummer: 21755956.6
(22) Anmeldetag: 06.08.2021
(51) Int. Cl.: G09B 9/02, A63F 13/90, B62D 23/00

(54) **MODULARES MODELL EINES FORMELRENNWAGENS, FAHRSIMULATOR MIT DEM MODELL**
MODULAR MODEL OF A FORMULA RACING CAR, DRIVING SIMULATOR WITH THE MODEL
MODÈLE MODULAIRE D'UNE VOITURE DE COURSE TYPE MONOPLACE, SIMULATEUR DE CONDUITE AVEC LE MODÈLE

(30) Priorität: 17.08.2020 DE 102020121559
(43) Veröffentlichungstag der Anmeldung: 21.06.2023
(73) Patentinhaber: Racerebel GmbH, 52388 Nörvenich (DE)
(72) Erfinder: KRÖMER, Stefan, 52388 Nörvenich (DE)
(74) Vertreter: Bernsmann, Falk
(86) Internationale Anmeldenummer: PCT/EP2021/072096
(87) Internationale Veröffentlichungsnummer: WO 2022/037976

(56) Entgegenhaltungen:
- EP-A1- 3 536 583
- CN-U- 201 877 017
- DE-U1- 202011 000 695
- US-A- 6 106 298
- US-A1- 2015 379 884
- ANONYMOUS: "Rent a race simulator | Bernax Race Simulators", 26 November 2018 (2018-11-26), pages 1 - 9, XP055860750, Retrieved from the Internet <URL:https://web.archive.org/web/20181126165236/https://www.bernax.ae/rent-a-race-simulator/> [retrieved on 20211112]
- ANONYMOUS: "BRD 06 Full Car Racing Simulator", 19 August 2010 (2010-08-19), pages 1 - 10, XP055860754, Retrieved from the Internet <URL:https://www.geeky-gadgets.com/brd-06-full-car-racing-simulator-20-08-2010/> [retrieved on 20211112]

## Beschreibung

### Technisches Gebiet

Die Erfindung betrifft ein originalgroßes, modulares Modell eines Formelrennwagens für einen Fahrsimulator und einen Fahrsimulator mit dem Modell.

### Stand der Technik

Aus dem Stand der Technik sind Sitze für Videospiele bekannt, die in ihrem Design an Sitze von Rennwagen, insbesondere von Formelrennwagen, angelehnt sind, um einem Benutzer eine realistischere Spielerfahrung als auf einem normalen Stuhl zu ermöglichen. Manche dieser Sitze sind auch mit Verkleidungen ausgestattet, um das Aussehen des Rennwagens zu simulieren, oder umfassen ein Bewegungssystem, um Fahrbewegungen des Rennwagens zu simulieren.

Bekannte Verkleidungen haben aber entweder nur eine entfernte Ähnlichkeit mit einem Formelrennwagen oder beanspruchen viel Platz, sind teuer und nur ohne Bewegungssystem erhältlich. Weiterhin sind die bekannten Bewegungssysteme nicht zur Erzeugung realitätsnaher Bewegungen geeignet sowie für eine Heimanwendung zu groß, zu schwer, zu laut und zu teuer.

Die Druckschriften EP 0 697 229 B1 und EP 0 701 851 B1 beschreiben jeweils Bewegungsvorrichtungen zum simulationsartigen Bewegen einer Spielkabine einer Spielmaschine. Die Spielkabine ist dabei eine geschlossene Kabine mit Sitzen, Display, Lenkrad, Pedalen und Flügeltüren. Es ist ein Bewegungssystem vorgesehen, das eine Hubbewegung und eine Drehbewegung der Spielkabine ermöglicht. Dabei kommen Luftdruckzylinderantriebe zum Einsatz. Die Bewegungsvorrichtungen sind damit zur Simulation von Flugbewegungen eines Flugzeugs, jedoch nicht von Fahrbewegungen eines Rennwagens geeignet. Weiterhin wird keine realitätsnahe Verkleidung beschrieben.

Die Druckschrift EP 1 594 104 B1 offenbart eine Fahrsimulationsvorrichtung zum Anzeigen eines Fahrhintergrunds als Bild auf einer Anzeige, um eine simulierte Fahrerfahrung auf einem Kraftrad basierend auf Bedienungen durch einen Fahrer zu geben. Es wird weder ein Sitz mit einer realitätsnahen Verkleidung noch eine Bewegungsvorrichtung beschrieben.

Die Druckschrift EP 1 884 269 A2 offenbart einen Simulator, umfassend ein Schwenkelement, auf dem ein Benutzer mitfährt, und einen ersten Antriebsmechanismus zum schwenkbaren Abstützen des Schwenkelements und zum Antreiben in einer vertikalen Richtung. Es wird auch ein Bewegungssystem für eine Neigung des Benutzers auf dem Schwenkelement in mindestens zwei Dimensionen offenbart. Das Bewegungssystem ist damit zur Simulation von Flugbewegungen eines Flugzeugs, jedoch nicht von Fahrbewegungen eines Rennwagens geeignet. Weiterhin wird keine realitätsnahe Verkleidung beschrieben.

Die Druckschrift WO 2009/082489 A2 offenbart einen weiteren Simulator, wobei der Simulator eine Basis und einen gegenüber der Basis beweglichen Schlitten umfasst, der einen Sitz für einen Benutzer trägt. Der Simulator dient z. B. zur Simulation von Autorennen. Im Betrieb erlaubt der Simulator zahlreiche Bewegungen des Sitzes, insbesondere indem der Schlitten mithilfe von Motoren gekippt wird. Eine realistische Simulation von Fahrbewegungen eines Formelrennwagens, der sich im Wesentlichen ohne Kippbewegungen in einer horizontalen Ebene bewegt, ist mit dem Simulator nicht möglich. Weiterhin wird keine realitätsnahe Verkleidung beschrieben. Weitere Beispiele von Fahrsimulationsvorrichtungen werden in den Dokumenten "Rent a race simulator | Bernax Race Simulators", 26. November 2018 (2018-11-26), Seiten 1-9, XP055860750 (https://web.archive.org/web/20181126165236/https://www.bernax.ae/rent-a-racesimulator/), "BRD 06 Full Car Racing Simulator", 19. August 2010, S. 1-2, XP055860754 (https://www.geeky-gadgets.com/brd-06-full-car-racing-simulator-20-08-2010/), US 6 106 298 A und CN 201 877 017 U beschrieben. Die Dokumente DE 20 2011 000 695 U1 und US 2015/379884 offenbaren Cockpit-Simulatoren, und das Dokument EP 3 536 583 A1 beschreibt ein modulares Chassis eines realen Fahrzeugs.

### Technische Aufgabe

Die Aufgabe der Erfindung ist es, eine kostengünstigen sowie einfach transportierbaren Simulator schaffen, der einem Benutzer eine realistischere Spielerfahrung eines Videospiels mit einem Formelrennwagen ermöglicht als Simulatoren aus dem Stand der Technik.

### Technische Lösung

Der Gegenstand der vorliegenden Erfindung stellt ein Modell gemäß Anspruch 1 bereit, das die technische Aufgabe löst. Ebenso wird die Aufgabe durch einen Fahrsimulator gemäß Anspruch 10 gelöst. Vorteilhafte Ausgestaltungen ergeben sich aus den abhängigen Ansprüchen.

### Beschreibung der Ausführungsarten

Die Erfindung betrifft ein originalgroßes modulares Modell zumindest eines Half-Cockpits eines Formelrennwagens für einen Fahrsimulator.

Ein Modell im Sinne der Erfindung entspricht zumindest in seiner äußeren Form, vorzugsweise auch in seiner äußeren Farbe, Musterung und/oder Oberflächenstruktur, dem modellierten Objekt und ruft bei einem Benutzer insbesondere den gleichen visuellen Gesamteindruck wie das modellierte Objekt hervor.

Im Sinne der Erfindung wird eine Karosserie des Formelrennwagens ohne Kopfstütze, Lufteinlass, Seitenkästen, Außenspiegel, Flügel, Räder und zugehörige Befestigungen als Half-Cockpit bezeichnet.

Das Modell ist originalgroß, stimmt also in seinen Abmessungen im Wesentlichen mit den entsprechenden Abmessungen des Formelrennwagens überein. Insbesondere ist das Modell so groß, dass sich ein erwachsener Mensch in das Modell hineinsetzen kann, um das Modell zu benutzen. Dadurch erweckt das Modell bei dem Benutzer den Eindruck, in einem realen Formelrennwagen zu sitzen.

Der modellierte Formelrennwagen ist beispielsweise ein Formel-1-Rennwagen ein Formel-2-Rennwagen, ein Formel-3-Rennwagen oder ein Formel-E-Rennwagen. Der modellierte Formelrennwagen kann ein realer aktueller oder historischer Formelrennwagen, beispielsweise eines bestimmten Renn-Teams oder einer bestimmten Renn-Saison, oder eine fiktive Mischung mehrerer aktueller und/oder historischer Formelrennwagen, beispielsweise von mehreren Renn-Teams und/oder aus mehreren Renn-Saisons, sein.

Das Modell umfasst eine selbsttragende Karosserie mit einer Mehrzahl von Karosseriemodulen, einer Mehrzahl von Karosserieverbindern und einer Mehrzahl von zu den Karosserieverbindern komplementären Karosserie-Gegenverbindern. Insbesondere kann die Karosserie ausschließlich aus den Karosseriemodulen, den Karosserieverbindern und den Karosserie-Gegenverbindern bestehen.

Die Karosserie ist selbsttragend, das heißt, die miteinander verbundenen Karosseriemodule tragen ihr eigenes Gewicht und müssen insbesondere nicht auf einem zusätzlichen Rahmen oder Gerüst montiert werden.

Die Karosseriemodule sind vorzugsweise so klein, dass sie einfach transportiert und gelagert werden können, beispielsweise in üblichen Umzugskartons. Andererseits sollen die Karosseriemodule auch nicht zu klein sein, um einen Zusammenbau der Karosserie aus den Karosseriemodulen nicht unnötig schwierig zu gestalten. In Versuchen haben sich Karosseriemodule mit einer größten Ausdehnung im Bereich von 10 cm bis 120 cm, insbesondere von 20 cm bis 80 cm, vorzugsweise von 30 cm bis 60 cm, als besonders vorteilhaft erwiesen.

Die Karosserie umfasst beispielsweise 5 bis 30, insbesondere 10 bis 20, Karosseriemodule. Eine solche Anzahl von Karosseriemodulen ermöglicht sowohl ein geringes Packmaß der Karosserie in der Transportkonfiguration als auch einen schnellen Auf- und Abbau der Karosserie.

Zwei Objekte sind komplementär zueinander im Sinne der Erfindung, wenn sie dazu ausgelegt sind, miteinander eine mechanisch tragende Verbindung zu bilden, beispielsweise durch einen Formschluss, einen Kraftschluss und/oder eine magnetische Wechselwirkung.

An jedem der Karosseriemodule ist eine Anzahl, insbesondere eine Mehrzahl, der Karosserieverbinder und/oder eine Anzahl, insbesondere eine Mehrzahl, der Karosserie-Gegenverbinder befestigt. Insbesondere kann zumindest eines, insbesondere jedes, der Karosseriemodule sowohl eine Anzahl von Karosserieverbindern als auch eine Anzahl von Karosserie-Gegenverbindern umfassen.

Zumindest eines der Karosseriemodule und zumindest ein zu dem Karosseriemodul benachbartes, weiteres der Karosseriemodule weisen zumindest eine mechanisch tragende und zerstörungsfrei lösbare Verbindung miteinander auf, wobei die zumindest eine Verbindung durch das Zusammenwirken zumindest eines der Karosserieverbinder des zumindest einen Karosseriemoduls mit zumindest einem der Karosserie-Gegenverbinder des zumindest einen weiteren Karosseriemoduls bewirkt ist.

Insbesondere können mehrere, vorzugsweise alle, Karosseriemodule jeweils zumindest eine mechanisch tragende und zerstörungsfrei lösbare Verbindung zu zumindest einem, insbesondere mehreren, weiteren Karosseriemodulen aufweisen, die jeweils durch das Zusammenwirken eines Paars oder mehrerer Paare von Karosserieverbindern und Karosserie-Gegenverbindern bewirkt sind.

Der modulare Aufbau mit der zerstörungsfrei, vorzugsweise werkzeugfrei, lösbaren Verbindung hat den Vorteil, dass die Karosserie aus einer Benutzungskonfiguration zur Benutzung der Karosserie schnell und einfach in eine Transportkonfiguration zur platzsparenden Lagerung und zum Transport der Karosserie überführt werden kann, indem die Karosserie in die Karosseriemodule zerlegt wird. Insbesondere kann die Karosserie mehrmals auf- und abgebaut werden, beispielsweise für einen Umzug oder um den von der Karosserie beanspruchten Raum vorübergehend anderweitig zu nutzen.

Weiterhin können die Karosseriemodule spezifische Karosseriemodule, die das Aussehen eines Formelrennwagens einer bestimmten Renn-Saison und/oder eines bestimmten Renn-Teams modellieren, und unspezifische Karosseriemodule, die für mehrere Renn-Saisons und/oder Renn-Teams gleich gestaltet sind, umfassen. Dadurch kann die Karosserie auf einfache Weise zur Modellierung von Formelrennwagen unterschiedlicher Renn-Saisons und/oder Renn-Teams umgerüstet werden, indem nur die spezifischen Karosseriemodule, beispielsweise an einer Oberseite, einer linken Seitenfläche und/oder einer rechten Seitenfläche der Karoserie, ausgetauscht und die unspezifischen Karosseriemodule, beispielsweise an einer Unterseite, einer Vorderseite und/oder einer Rückseite der Karosserie, beibehalten werden.

Richtungsbezeichnungen wie "vorne", "hinten", "oben", "unten", "rechts", "links" beziehen sich in dieser Anmeldung soweit nicht anders angegeben auf eine Fahrtrichtung des von dem Modell modellierten Formelrennwagens.

Das Modell kann einen in der Karosserie angeordneten Sitz für einen Benutzer des Modells umfassen. Der Sitz ist vorzugsweise zumindest in seinem Aussehen wie der Fahrersitz des Formelrennwagens ausgestaltet.

Zumindest eines, vorzugsweise mehrere, insbesondere jedes, der Karosseriemodule ist oder sind vorzugsweise mit den daran befestigten Karosserieverbindern und/oder Karosserie-Gegenverbindern einstückig. Dadurch ergibt sich eine besonders zuverlässige Befestigung an dem Karosseriemodul und das Karosseriemodul kann zusammen mit den Karosserieverbindern und/oder Karosserie-Gegenverbindern besonders schnell und kostengünstig, beispielsweise durch Spritzgießen aus einem Kunststoff oder durch ein additives Verfahren, hergestellt werden.

Zumindest einer, vorzugsweise mehrere, insbesondere jeder, der Karosserieverbinder umfasst oder umfassen zumindest ein Steckelement. Zumindest einer, vorzugsweise mehrere, insbesondere jeder, der Karosserie-Gegenverbinder umfasst oder umfassen zumindest ein Aufnahmeelement zur Aufnahme des zumindest einen Steckelements. In dieser Ausgestaltung bilden die Karosserieverbinder mit den Karosserie-Gegenverbindern eine Steckverbindung, die eine besonders schnelle Montage der Karosserie ermöglicht.

Der zumindest eine Karosserieverbinder und/oder der zumindest eine Karosserie-Gegenverbinder umfasst vorzugsweise zumindest ein Klemmelement zur kraftschlüssigen Halterung und/oder ein Rastelement zur formschlüssigen Halterung des zumindest einen Steckelements in dem zumindest einen Aufnahmeelement. Das Klemmelement und/oder Rastelement verhindert ein unbeabsichtigtes Lösen der Steckverbindung, beispielsweise durch Bewegungen der Karosserie zur Simulation von Fahrbewegungen des Formelrennwagens.

Zumindest einer, vorzugsweise mehrere, insbesondere jeder, der Karosserieverbinder bildet vorzugsweise mit zumindest einem der Karosserie-Gegenverbinder einen Spannverschluss, Kipp-Spannverschluss und/oder Exzenterverschluss. Ein solcher Verschluss hat die Vorteile, dass sich schnell und in der Regel ohne Werkzeug öffnen und schließen lässt, und dass er eine mechanisch besonders stabile Verbindung bildet.

Zumindest einer, vorzugsweise mehrere, insbesondere jeder, der Karosserieverbinder und/oder zumindest einer, vorzugsweise mehrere, insbesondere jeder, der Karosserie-Gegenverbinder umfasst vorzugsweise zumindest ein Gelenk, bevorzugt zumindest ein Scharnier, das eine faltbare Verbindung des zumindest einen Karosseriemoduls mit dem zumindest einen weiteren Karosseriemodul bewirkt. Ein faltbare Verbindung erlaubt es, die Karosserie besonders schnell und einfach von der Benutzungskonfiguration in die Transportkonfiguration zu überführen, indem die Karosserie zusammengefaltet wird.

Das Modell umfasst eine Anzahl von Anbaumodulen zur Modellierung zumindest eines Seitenkastens, zumindest eines Flügels, eines Lufteinlasses, zumindest eines Außenspiegels und/oder einer Kopfstütze des Formelrennwagens. Die Anbaumodule haben den Vorteil, dass sie ein noch realistischeres Spielerlebnis für den Benutzer des Modells erzeugen.

An zumindest einem, vorzugsweise mehreren, der Karosseriemodule ist zumindest ein Anbauverbinder und an zumindest einem, vorzugsweise mehreren, insbesondere jedem, der Anbaumodule ist zumindest ein zu dem Anbauverbinder komplementärer Anbau-Gegenverbinde befestigt, wobei der zumindest eine Anbauverbinder und der zumindest eine Anbau-Gegenverbinder zur zerstörungsfrei lösbaren und mechanisch tragenden Verbindung des zumindest einen Anbaumoduls mit dem zumindest einen Karosseriemodul ausgelegt sind. Das Karosseriemodul und/oder das Anbaumodul kann insbesondere mehrere Anbauverbinder bzw. Anbau-Gegenverbinder umfassen.

Die Anbauverbinder und Anbau-Gegenverbinder erlauben eine schnelle und einfache Nachrüstung des Modells mit den Anbaumodulen. Außerdem können die Anbaumodule schnell und einfach ausgetauscht werden, beispielsweise um Formelrennwagen unterschiedlicher Renn-Saisons und/oder unterschiedlicher Renn-Teams zu modellieren.

Die Anbauverbinder und Anbau-Gegenverbinder können beispielsweise so ausgestaltet sein wie zuvor für die Karosserieverbinder und Karosserie-Gegenverbinder beschrieben.

Der zumindest eine Anbauverbinder ist zumindest in einem unbenutzten Zustand von einer Außenseite des Modells verdeckt, bevorzugt von dem Karosseriemodul umschlossen, an dem zumindest einen Karosseriemodul befestigt. Dadurch wird verhindert, dass sich der Benutzer an dem unbenutzten, also nicht mit einem Anbau-Gegenverbinder verbundenen, Anbauverbinder verletzt, oder dass der unbenutzte Anbauverbinder einen visuellen Gesamteindruck des Modells beeinträchtigt. Der Anbauverbinder kann beispielsweise im unbenutzten Zustand von einer Klappe oder einem Deckel des Karosseriemoduls verdeckt sein.

Der zumindest eine Anbauverbinder und/oder der zumindest eine Anbau-Gegenverbinder umfasst vorzugsweise zumindest einen Magneten zur Herstellung einer magnetischen Verbindung zwischen dem zumindest einen Anbauverbinder und dem zumindest einen Anbau-Gegenverbinder. Wenn der Anbauverbinder einen Magneten umfasst, kann der Anbau-Gegenverbinder beispielsweise einen zu dem Magneten komplementären Gegenmagneten und/oder ein von dem Magneten magnetisierbares Element umfassen oder umgekehrt.

Eine magnetische Verbindung hat den besonderen Vorteil, dass der Magnet, der Gegenmagnet und/oder das magnetisierbare Element in das Karosseriemodul und/oder das Anbaumodul eingebettet sein kann und somit keine Verletzungsgefahr und keine visuelle Beeinträchtigung darstellt.

Das Modell umfasst vorzugsweise zumindest ein, bevorzugt an einer Rückseite des Modells angeordnetes, Aufnahmefach zur Aufnahme von Zubehörteilen des Modells, umfassend zumindest einen Computer, bevorzugt eine Videospielkonsole, und/oder eine Anzahl von Eingabegeräten und/oder eine Anzahl von Speichermedien für den zumindest einen Computer. Die Eingabegeräte können beispielsweise zumindest ein Lenkrad und eine Anzahl von Pedalen umfassen. In dem Aufnahmefach können die Zubehörteile platzsparend und sicher verstaut und/oder ansprechend präsentiert werden.

Die Erfindung betrifft einen Fahrsimulator mit einem erfindungsgemäßen Modell eines Formelrennwagens und einem mit dem Modell mechanisch verbundenen Bewegungssystem zur Simulation von Fahrbewegungen des Formelrennwagens. Das Bewegungssystem ist zur Bewegung des Modells in einer horizontalen Ebene, insbesondere zur Translation zumindest entlang einer Längsachse und/oder einer Querachse des Modells und/oder zur Rotation um eine Normale der Ebene, ausgelegt.

Das Bewegungssystem erlaubt eine realistische Simulation von Fahrbewegungen des Formelrennwagens, weil sich ein Formelrennwagen in der Regel im Wesentlichen in einer horizontalen Ebene bewegt. Das Bewegungssystem ist ausschließlich zur Bewegung des Modells in einer horizontalen Ebene ausgelegt. Dadurch kann das Bewegungssystem besonders einfach, kostengünstig und platzsparend sein.

Das Bewegungssystem umfasst vorzugsweise zumindest eine untere Platte und zumindest eine parallel auf der unteren Platte angeordnete obere Platte. Die untere Platte ist zur ortsfesten und horizontalen Anordnung auf einem Untergrund des Fahrsimulators ausgelegt. Vorzugsweise wird die untere Platte durch ihre Masse auf dem Untergrund fixiert, sodass keine Halteelemente für die untere Platte in den Untergrund eingebracht werden müssen.

Die obere Platte trägt das Modell und ist mit der unteren Platte parallel zu den Platten beweglich verbunden. Dadurch kann das Modell mit der oberen Platte zur Simulation der Fahrbewegungen relativ zu der unteren Platte bewegt werden.

Das Bewegungssystem umfasst vorzugsweis eine Anzahl von elektromechanischen Aktuatoren zur Bewegung des Modells. Elektromechanische Aktuatoren, beispielsweise Elektromotoren, haben gegenüber den bei Simulatoren üblichen hydraulischen Aktoren die Vorteile, dass sie weniger Platz beanspruchen, weniger störende Geräusche verursachen und sich, insbesondere im Fall von Servomotoren, präziser ansteuern lassen. Elektromechanische Aktuatoren ermöglichen somit einen besonders kompakten Aufbau des Fahrsimulators und eine besonders realistische Simulation der Fahrbewegungen.

Der Fahrsimulator umfasst vorzugsweise eine Anzahl von Eingabegeräten, umfassend ein Lenkrad und/oder eine Anzahl von Pedalen, und zumindest ein mit den Eingabegeräten und dem Bewegungssystem kommunikativ verbundenes Steuergerät zur Steuerung des Bewegungssystems. Das Steuergerät ist dazu eingerichtet, mit dem Bewegungssystem basierend auf von einem Benutzer des Fahrsimulators ausgelösten Eingabebewegungen der Eingabegeräte zu den Eingabebewegungen korrespondierende Fahrbewegungen des Modells zu simulieren.

Das Steuergerät kann beispielsweise als oder in einem Computer, insbesondere einer Videospielkonsole, als Hardware oder Software implementiert sein. Daraus ergibt sich der Vorteil, dass kein separates Steuergerät benötigt wird.

### Kurze Beschreibung der Zeichnungen

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugszeichen gekennzeichnet sein, wobei diese Merkmale nicht in allen Figuren beziffert und erläutert sein müssen.
Figur 1 zeigt eine schematische Explosionszeichnung eines erfindungsgemäßen Modells.
Figur 2 zeigt eine schematische Perspektivzeichnung eines als Lufteinlass ausgestalteten Anbaumoduls eines erfindungsgemäßen Modells.
Figur 3 zeigt eine schematische Perspektivzeichnung eines als Seitenkasten ausgestalteten Anbaumoduls eines erfindungsgemäßen Modells.
Figur 4 zeigt eine schematische Perspektivzeichnung eines als Außenspiegel ausgestalteten Anbaumoduls eines erfindungsgemäßen Modells.
Figur 5 zeigt eine schematische Perspektivzeichnung eines als Kopfstütze ausgestalteten Anbaumoduls eines erfindungsgemäßen Modells.
Figur 6 zeigt eine schematische Perspektivzeichnung von als Flügel ausgestalteten Anbaumodulen eines erfindungsgemäßen Modells.
Figur 7 zeigt eine schematische Perspektivzeichnung von als Kamera und Spiegel ausgestalteten Anbaumodulen eines erfindungsgemäßen Modells.
Figur 8 zeigt eine schematische Perspektivzeichnung eines Bewegungssystems eines erfindungsgemäßen Fahrsimulators.

### Fig.1

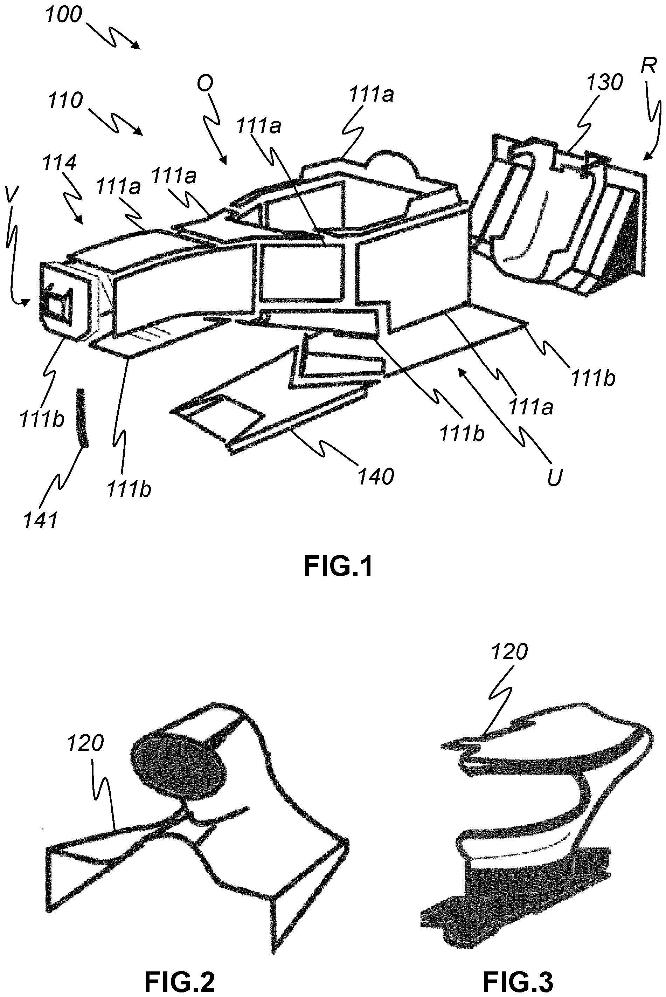

Figur 1 zeigt eine schematische Explosionszeichnung eines erfindungsgemäßen Modells 100 eines Half-Cockpits eines Formelrennwagens, insbesondere eines Formel-1-Rennwagens, für einen Fahrsimulator.

Das Modell 100 umfasst eine selbsttragende Karosserie 110 aus einer Mehrzahl von Karosseriemodulen 111, die über Karosserieverbinder (nicht dargestellt) und Karosserie-Gegenverbinder (nicht dargestellt) zerstörungsfrei lösbar miteinander verbunden sind.

Die Karosseriemodule 111 umfassen beispielsweise eine Anzahl von spezifischen Karosseriemodulen 111a, die das Aussehen eines Formelrennwagens einer bestimmten Renn-Saison und/oder eines bestimmten Renn-Teams modellieren, und eine Anzahl von unspezifischen Karosseriemodulen 111b, die für mehrere Renn-Saisons und/oder Renn-Teams gleich gestaltet sind. Die spezifischen Karosseriemodule 111a sind vorzugsweise an einer Oberseite O, einer rechten Seitenfläche und/oder einer linken Seitenfläche des Modells 100 angeordnet. Die unspezifischen Karosseriemodule 111b sind vorzugsweise an einer Unterseite U, einer Vorderseite V und/oder einer Rückseite R des Modells 100 angeordnet.

Um zu verhindern, dass das Modell 100 aufgrund der fehlenden Räder vornüber kippt, umfasst es vorzugsweise eine unter einem Vorderabschnitt 114 der Karosserie 110 angebrachte Stütze 141 und/oder eine an einer Unterseite U der Karosserie angebrachte Bodenplatte 140.

Das Modell 100 kann ein Aufnahmefach 130 zur Aufnahme von Zubehörteilen des Modells 100 umfassen, wobei das Aufnahmefach 130 vorzugsweise an einer Rückseite R des Modells 100 angeordnet ist.

### Fig.2

Figur 2 zeigt eine schematische Perspektivzeichnung eines als Lufteinlass ausgestalteten Anbaumoduls 120 eines erfindungsgemäßen Modells.

Dieses und die in den weiteren Figuren gezeigten Anbaumodule 120 können jeweils zumindest einen Anbau-Gegenverbinder (nicht dargestellt) umfassen. Der Anbau-Gegenverbinder ist dazu ausgelegt, mit einem Anbauverbinder eines Karosseriemoduls des Modells eine mechanisch tragende und zerstörungsfrei lösbare Verbindung zu bilden.

### Fig.3

Figur 3 zeigt eine schematische Perspektivzeichnung eines als Seitenkasten ausgestalteten Anbaumoduls 120 eines erfindungsgemäßen Modells.

### Fig.4

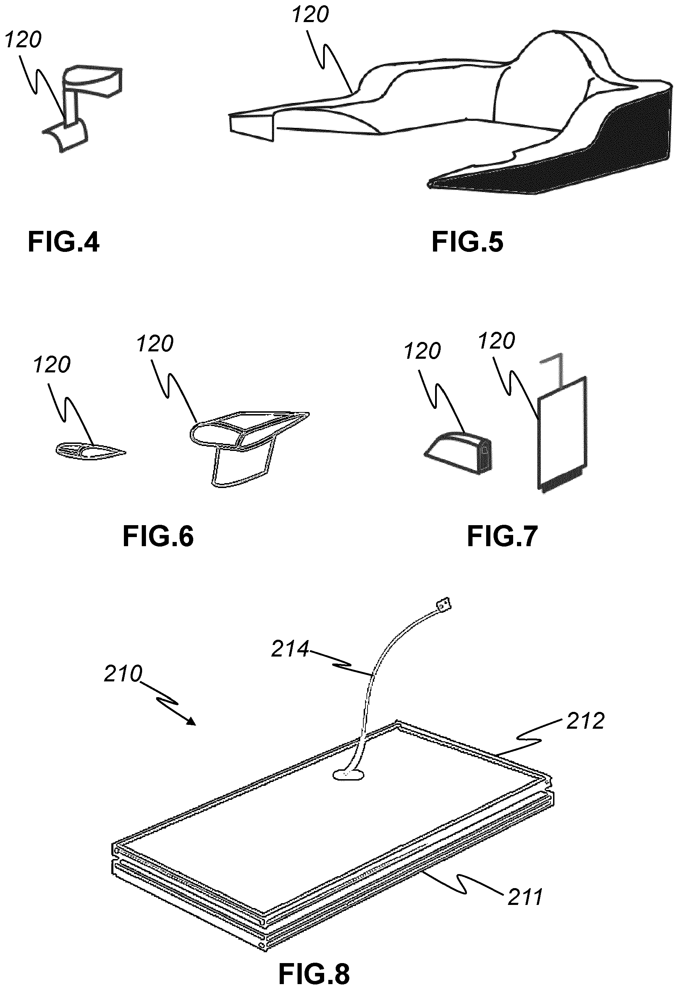

Figur 4 zeigt eine schematische Perspektivzeichnung eines als Außenspiegel ausgestalteten Anbaumoduls 120 eines erfindungsgemäßen Modells.

### Fig.5

Figur 5 zeigt eine schematische Perspektivzeichnung eines als Kopfstütze ausgestalteten Anbaumoduls 120 eines erfindungsgemäßen Modells.

### Fig.6

Figur 6 zeigt eine schematische Perspektivzeichnung von als Flügel ausgestalteten Anbaumodulen 120 eines erfindungsgemäßen Modells.

### Fig.7

Figur 7 zeigt eine schematische Perspektivzeichnung von als Kamera (links) und Spiegel (rechts) ausgestalteten Anbaumodulen 120 eines erfindungsgemäßen Modells.

Die Kamera und gegebenenfalls der Spiegel können dazu genutzt werden, einen Benutzer des Modells zu filmen, um seine Reaktion auf ein Spielerlebnis während einer Benutzung des Modells zu dokumentieren. Auf Basis dieser Dokumentation können das Modell und/oder ein damit ausgestatteter Fahrsimulator für ein möglichst positives Spielerlebnis optimiert werden.

### Fig.8

Figur 8 zeigt eine schematische Perspektivzeichnung eines Bewegungssystems 210 eines erfindungsgemäßen Fahrsimulators.

Das Bewegungssystem 210 umfasst eine untere Platte 211 und eine parallel auf der unteren Platte 211 angeordnete obere Platte 210, wobei die untere Platte 211 ortsfest und horizontal auf einem Untergrund des Fahrsimulators angeordnet werden kann, und die obere Platte 212 das Modell (nicht dargestellt) trägt und mit der unteren Platte 211 parallel zu den Platten beweglich verbunden ist.

Das Bewegungssystem 210 umfasst eine Anzahl von elektromechanischen Aktuatoren (nicht dargestellt) zur Bewegung des Modells und eine Verbindungsleitung 214 zur Verbindung der Aktuatoren mit einem Steuergerät (nicht dargestellt) und/oder einer Energieversorgung (nicht dargestellt) für die Aktuatoren.

**Liste der Bezugszeichen**

| | | | |
|---|---|---|---|
| 100 | Modell | 210 | Bewegungssystem |
| 110 | Karosserie | 211 | untere Platte |
| 111 | Karosseriemodul | 212 | obere Platte |
| 111a | spezifisches Karosseriemodul | 214 | Verbindungsleitung |
| 111b | unspezifisches Karosseriemodul | | |
| 114 | Vorderabschnitt | O | Oberseite |
| 120 | Anbaumodul | R | Rückseite |
| 130 | Aufnahmefach | U | Unterseite |
| 140 | Bodenplatte | V | Vorderseite |
| 141 | Stütze | | |

## Patentansprüche

1. Originalgroßes, modulares Modell (100) zumindest eines Half-Cockpits eines Formelrennwagens für einen Fahrsimulator,
a. umfassend eine selbsttragende Karosserie (110) mit
i. einer Mehrzahl von Karosseriemodulen (111),
ii. einer Mehrzahl von Karosserieverbindern und
iii. einer Mehrzahl von zu den Karosserieverbindern komplementären Karosserie-Gegenverbindern,
b. wobei an jedem der Karosseriemodule (111) eine Anzahl der Karosserieverbinder und/oder eine Anzahl der Karosserie-Gegenverbinder befestigt ist,
c. wobei zumindest eines der Karosseriemodule (111) und zumindest ein zu dem Karosseriemodul (111) benachbartes, weiteres der Karosseriemodule (111) zumindest eine mechanisch tragende und zerstörungsfrei lösbare Verbindung miteinander aufweisen,
d. wobei die zumindest eine Verbindung durch das Zusammenwirken zumindest eines der Karosserieverbinder des zumindest einen Karosseriemoduls (111) mit zumindest einem der Karosserie-Gegenverbinder des zumindest einen weiteren Karosseriemoduls (111) bewirkt ist,
e. wobei das Modell (100) eine Anzahl von Anbaumodulen (120) zur Modellierung zumindest eines Seitenkastens, zumindest eines Flügels, eines Lufteinlasses, zumindest eines Außenspiegels und/oder einer Kopfstütze des Formelrennwagens umfasst,
**dadurch gekennzeichnet, dass**
f. an zumindest einem der Karosseriemodule (111) zumindest ein Anbauverbinder und an zumindest einem der Anbaumodule (120) zumindest ein zu dem Anbauverbinder komplementärer Anbau-Gegenverbinder befestigt ist,
g. wobei der zumindest eine Anbauverbinder und der zumindest eine Anbau-Gegenverbinder zur zerstörungsfrei lösbaren und mechanisch tragenden Verbindung des zumindest einen Anbaumoduls (120) mit dem zumindest einen Karosseriemodul (111) ausgelegt sind, und
h. wobei der zumindest eine Anbauverbinder zumindest in einem unbenutzten Zustand von einer Außenseite des Modells (100) verdeckt an dem zumindest einen Karosseriemodul (111) befestigt ist.

2. Modell (100) nach Anspruch 1,
**dadurch gekennzeichnet, dass**
zumindest eines der Karosseriemodule (111) mit den daran befestigten Karosserieverbindern und/oder Karosserie-Gegenverbindern einstückig ist.

3. Modell (100) nach Anspruch 1 oder 2,
**dadurch gekennzeichnet, dass**
zumindest einer der Karosserieverbinder zumindest ein Steckelement und zumindest einer der Karosserie-Gegenverbinder zumindest ein Aufnahmeelement zur Aufnahme des zumindest einen Steckelements umfasst.

4. Modell (100) nach Anspruch 3
**dadurch gekennzeichnet, dass**
der zumindest eine Karosserieverbinder und/oder der zumindest eine Karosserie-Gegenverbinder zumindest ein Klemmelement zur kraftschlüssigen Halterung und/oder ein Rastelement zur formschlüssigen Halterung des zumindest einen Steckelements in dem zumindest einen Aufnahmeelement umfasst.

5. Modell (100) nach einem der Ansprüche 1 bis 4,
**dadurch gekennzeichnet, dass**
zumindest einer der Karosserieverbinder mit zumindest einem der Karosserie-Gegenverbinder einen Spannverschluss, Kipp-Spannverschluss und/oder Exzenterverschluss bildet.

6. Modell (100) nach einem der Ansprüche 1 bis 5,
**dadurch gekennzeichnet, dass**
zumindest einer der Karosserieverbinder und/oder zumindest einer der Karosserie-Gegenverbinder zumindest ein Gelenk, bevorzugt zumindest ein Scharnier, umfasst, das eine faltbare Verbindung des zumindest einen Karosseriemoduls (111) mit dem zumindest einen weiteren Karosseriemodul (111) bewirkt.

7. Modell (100) nach einem der Ansprüche 1 bis 6,
**dadurch gekennzeichnet, dass**
der zumindest eine Anbauverbinder zumindest in einem unbenutzten Zustand von dem Karosseriemodul (111) umschlossen an dem zumindest einen Karosseriemodul (111) befestigt ist.

8. Modell (100) nach einem der Ansprüche 1 bis 7,
**dadurch gekennzeichnet, dass**
der zumindest eine Anbauverbinder und/oder der zumindest eine Anbau-Gegenverbinder zumindest einen Magneten zur Herstellung einer magnetischen Verbindung zwischen dem zumindest einen Anbauverbinder und dem zumindest einen Anbau-Gegenverbinder umfasst.

9. Modell (100) nach einem der Ansprüche 1 bis 8,
**gekennzeichnet durch**
zumindest ein, bevorzugt an einer Rückseite des Modells (100) angeordnetes, Aufnahmefach (130) zur Aufnahme von Zubehörteilen des Modells (100), umfassend zumindest einen Computer, bevorzugt eine Videospielkonsole, und/oder eine Anzahl von Eingabegeräten und/oder eine Anzahl von Speichermedien für den zumindest einen Computer.

10. Fahrsimulator,
**gekennzeichnet durch**
a. ein Modell (100) eines Formelrennwagens nach einem der Ansprüche 1 bis 9 und
b. ein mit dem Modell (100) mechanisch verbundenes Bewegungssystem (210) zur Simulation von Fahrbewegungen des Formelrennwagens,
c. wobei das Bewegungssystem (210) zur Bewegung des Modells (100) ausschließlich in einer horizontalen Ebene ausgelegt ist.

11. Fahrsimulator nach Anspruch 10,
**dadurch gekennzeichnet, dass**
a. das Bewegungssystem (210) zumindest eine untere Platte (211) und zumindest eine parallel auf der unteren Platte (211) angeordnete obere Platte (212) umfasst, wobei
b. die untere Platte (211) zur ortsfesten und horizontalen Anordnung auf einem Untergrund des Fahrsimulators ausgelegt ist, und
c. die obere Platte (212) das Modell (100) trägt und mit der unteren Platte (211) ausschließlich parallel zu den Platten (211, 212) beweglich verbunden ist.

12. Fahrsimulator nach Anspruch 10 oder 11,
**dadurch gekennzeichnet, dass** das Bewegungssystem (210) eine Anzahl von elektromechanischen Aktuatoren zur Bewegung des Modells (100) umfasst.

13. Fahrsimulator nach einem der Ansprüche 10 bis 12,
**gekennzeichnet durch**
a. eine Anzahl von Eingabegeräten, umfassend ein Lenkrad und/oder eine Anzahl von Pedalen, und
b. zumindest ein mit den Eingabegeräten und dem Bewegungssystem (210) kommunikativ verbundenes Steuergerät zur Steuerung des Bewegungssystems (210),
c. wobei das Steuergerät dazu eingerichtet ist, mit dem Bewegungssystem (210) basierend auf von einem Benutzer des Fahrsimulators ausgelösten Eingabebewegungen der Eingabegeräte zu den Eingabebewegungen korrespondierende Fahrbewegungen des Modells (100) zu simulieren.

## Claims

1. An original-size, modular model (100) at least of a half-cockpit of a formula racing car for a driving simulator,
a. comprising a self-supporting body (110) having
i. a plurality of body modules (111),
ii. a plurality of body connectors, and
iii. a plurality of body mating connectors complementary to the body connectors,
b. wherein a number of the body connectors and/or a number of the body mating connectors are attached to each of the body modules (111),
c. wherein at least one of the body modules (111) and at least one further body module (111) adjacent to the at least one body module (111) have at least one mechanically supporting and non-destructively detachable connection to one another,
d. wherein the at least one connection is brought about by the interaction of at least one of the body connectors of the at least one body module (111) with at least one of the body mating connectors of the at least one further body module (111),
e. wherein the model (100) comprises a number of add-on modules (120) for modeling at least one side box, at least one wing, an air inlet, at least one outside mirror and/or a headrest of the formula racing car,
**characterized in that**
f. at least one add-on connector is attached to at least one of the body modules (111), and at least one add-on mating connector, being complementary to the add-on connector, is attached to at least one of the add-on modules (120),
g. wherein the at least one add-on connector and the at least one add-on mating connector are designed for the non-destructively detachable and mechanically supporting connection of the at least one add-on module (120) to the at least one body module (111), and
h. wherein the at least one add-on connector is attached to the at least one body module (111) in a way concealed from an outer side of the model (100) at least in an unused state.

2. The model (100) according to claim 1,
**characterized in that**
at least one of the body modules (111) is integral with the body connectors and/or body mating connectors attached thereto.

3. The model (100) according to claim 1 or 2,
**characterized in that**
at least one of the body connectors comprises at least one plug-in element, and at least one of the body mating connectors comprises at least one receiving element for receiving the at least one plug-in element.

4. The model (100) according to claim 3,
**characterized in that**
the at least one body connector and/or the at least one body mating connector comprises at least one clamping element for non-positive holding and/or a locking element for positive holding of the at least one plug-in element in the at least one receiving element.

5. The model (100) according to one of claims 1 to 4,
**characterized in that**
at least one of the body connectors forms a tension lock, a tilt tension lock and/or an eccentric lock with at least one of the body mating connectors.

6. The model (100) according to one of claims 1 to 5,
**characterized in that**
at least one of the body connectors and/or at least one of the body mating connectors comprises at least one joint, preferably at least one hinge, which effects a foldable connection of the at least one body module (111) to the at least one further body module (111).

7. The model (100) according to one of claims 1 to 6,
**characterized in that**
the at least one add-on connector is fastened to the at least one body module (111) at least in an unused state in a way enclosed by the body module (111).

8. The model (100) according to one of claims 1 to 7,
**characterized in that**
the at least one add-on connector and/or the at least one add-on mating connector comprises at least one magnet for establishing a magnetic connection between the at least one add-on connector and the at least one add-on mating connector.

9. The model (100) according to one of claims 1 to 8,
**characterized by**
at least one receiving compartment (130), preferably arranged on a rear side of the model (100), for receiving accessories of the model (100), comprising at least one computer, preferably a video game console, and/or a number of input devices and/or a number of storage media for the at least one computer.

10. A driving simulator,
**characterized by**
a. a model (100) of a formula racing car according to one of claims 1 to 9 and
b. a movement system (210) mechanically connected to the model (100) for simulating driving movements of the formula racing car,
c. wherein the movement system (210) is designed to move the model (100) exclusively in a horizontal plane.

11. The driving simulator according to claim 10,
**characterized in that**
a. the movement system (210) comprises at least one lower plate (211) and at least one upper plate (212) arranged in parallel on the lower plate (211),
b. wherein the lower plate (211) is designed for stationary and horizontal arrangement on a base of the driving simulator, and
c. the upper plate (212) supports the model (100) and is connected to the lower plate (211) in a way being movable exclusively in parallel to the plates (211, 212).

12. The driving simulator according to claim 10 or 11,
**characterized in that**
the movement system (210) comprises a number of electromechanical actuators for moving the model (100).

13. The driving simulator according to one of claims 10 to 12,
**characterized by**
a. a number of input devices, comprising a steering wheel and/or a number of pedals, and
b. at least one control device communicatively connected to the input devices and to the movement system (210) for controlling the movement system (210),
c. wherein the control device is set up to simulate driving movements of the model (100) with the movement system (210), the driving movements corresponding to input movements of the input devices triggered by a user of the driving simulator.

## Revendications

1. Modèle modulaire (100) de taille originale d'au moins un demi-cockpit d'une voiture de course de formule pour un simulateur de conduite,
a. comprenant un corps autoporteur (110) avec
i. une pluralité de modules de corps (111),
ii. une pluralité de connecteurs de corps et
iii. une pluralité de connecteurs d'accouplement de corps complémentaires aux connecteurs de corps,
b. un certain nombre des connecteurs de corps et/ou un certain nombre des connecteurs d'accouplement de corps étant fixés à chacun des modules de corps (111),
c. au moins un des modules de corps (111) et au moins un autre des modules de corps (111) adjacent audit module de corps (111) ayant au moins une connexion de support mécanique et détachable de manière non destructive l'un à l'autre,
d. ladite au moins une connexion étant effectuée par l'interaction d'au moins un des connecteurs de corps du au moins un module de corps (111) avec au moins un des connecteurs d'accouplement de corps du au moins un autre module de corps (111),
e. le modèle (100) comprenant un certain nombre de modules additionnels (120) pour modéliser au moins un coffre latéral, au moins une aile, une entrée d'air, au moins un rétroviseur extérieur et/ou un appui-tête de la voiture de course de formule,
**caractérisé en ce que**
f. au moins un connecteur additionnel est fixé sur au moins un des modules de corps (111), et au moins un connecteur d'accouplement additionnel, étant complémentaire au connecteur additionnel, est fixé à au moins un des modules additionnels (120),
g. ledit au moins un connecteur additionnel et ledit au moins un connecteur d'accouplement additionnel étant conçus pour la connexion détachable de manière non destructive et supportant mécaniquement dudit au moins un module complémentaire (120) audit au moins un module de corps (111), et
h. ledit au moins un connecteur additionnel étant fixé audit au moins un module de corps (111) de manière cachée depuis l'extérieur du modèle (100) au moins dans un état inutilisé.

2. Modèle (100) selon la revendication 1,
**caractérisé en ce qu'**au moins un des modules de corps (111) est d'une seule pièce avec les connecteurs de corps et/ou les connecteurs d'accouplement de corps qui y sont fixés.

3. Modèle (100) selon la revendication 1 ou 2,
**caractérisé en ce qu'**au moins un des connecteurs de corps comprend au moins un élément enfichable, et au moins un des connecteurs d'accouplement de corps comprend au moins un élément de réception pour recevoir ledit au moins un élément enfichable.

4. Modèle (100) selon la revendication 3,
**caractérisé en ce que** ledit au moins un connecteur de corps et/ou ledit au moins un connecteur d'accouplement de corps présente au moins un élément de serrage pour un maintien non positif et/ou un élément de verrouillage pour le maintien positif dudit au moins un élément enfichable dans ledit au moins un élément de réception.

5. Modèle (100) selon l'une des revendications 1 à 4,
**caractérisé en ce qu'**au moins un des connecteurs de corps forme un verrou à tension, une fermeture à tension basculante et/ou une fermeture excentrique avec au moins un des connecteurs d'accouplement de corps.

6. Modèle (100) selon l'une des revendications 1 à 5,
**caractérisé en ce qu'**au moins un des connecteurs de corps et/ou au moins un des connecteurs d'accouplement de corps comprend au moins une articulation, de préférence au moins une charnière, qui présente une liaison pliable dudit au moins un module de corps (111) avec ledit au moins un autre module de corps (111).

7. Modèle (100) selon l'une des revendications 1 à 6,
**caractérisé en ce que** ledit au moins un connecteur additionnel est fixé audit au moins un module de corps (111) de façon entourée par le module de corps (111) au moins dans un état inutilisé.

8. Modèle (100) selon l'une des revendications 1 à 7,
**caractérisé en ce que** ledit au moins un connecteur additionnel et/ou ledit au moins un connecteur d'accouplement additionnel présente au moins un aimant pour réaliser une connexion magnétique entre ledit au moins un connecteur additionnel et ledit au moins un connecteur d'accouplement additionnel.

9. Modèle (100) selon l'une des revendications 1 à 8,
**caractérisé par** au moins un compartiment de réception (130), disposé de préférence sur un dos du modèle (100), pour recevoir des accessoires du modèle (100) comprenant au moins un ordinateur, de préférence une console de jeux vidéo, et/ou un certain nombre de dispositifs d'entrée et/ou un certain nombre de supports de stockage pour ledit au moins un ordinateur.

10. Simulateur de conduite,
**caractérisé par**
a. un modèle (100) d'une voiture de course de formule selon l'une des revendications 1 à 9 et
b. un système de mouvement (210) relié mécaniquement au modèle (100) pour simuler les mouvements de conduite de la voiture de course de formule,
c. le système de déplacement (210) étant conçu pour déplacer le modèle (100) exclusivement dans un plan horizontal.

11. Simulateur de conduite selon la revendication 10,
**caractérisé en ce que**
a. le système de mouvement (210) comprend au moins une plaque inférieure (211) et au moins une plaque supérieure (212) disposées parallèlement sur la plaque inférieure (211),
b. la plaque inférieure (211) étant conçue pour être disposée de manière stationnaire et horizontale sur un support du simulateur de conduite, et
c. le plateau supérieur (212) portant le modèle (100) et étant relié au plateau inférieur (211) de façon mobile exclusivement parallèlement aux plateaux (211, 212).

12. Simulateur de conduite selon la revendication 10 ou 11,
**caractérisé en ce que** le système de mouvement (210) comprend un certain nombre d'actionneurs électromécaniques pour déplacer le modèle (100).

13. Simulateur de conduite selon l'une des revendications 10 à 12,
**caractérisé par**
a. un certain nombre de dispositifs d'entrée comprenant un volant et/ou un certain nombre de pédales, et
b. au moins un dispositif de commande connecté en communication aux dispositifs d'entrée et au système de mouvement (210) pour commander le système de mouvement (210),
c. le dispositif de commande étant configuré pour simuler des mouvements de conduite du modèle (100) en utilisant le système de mouvement (210), les mouvements de conduite correspondant à des mouvements d'entrée des dispositifs d'entrée déclenchés par un utilisateur du simulateur de conduite.
